# EUROPÄISCHE PATENTSCHRIFT

(11) **EP 2 867 627 B1**
(45) Veröffentlichungstag und Bekanntmachung des Hinweises auf die Patenterteilung: **21.09.2016**
(21) Anmeldenummer: 13731688.1
(22) Anmeldetag: 21.06.2013
(51) Int. Cl.: G01D 11/28

(54) **ANZEIGEINSTRUMENT FÜR EIN KRAFTFAHRZEUG**
DISPLAY INSTRUMENT FOR A MOTOR VEHICLE
INSTRUMENT INDICATEUR POUR VÉHICULE A MOTEUR

(30) Priorität: 28.06.2012 DE 102012012822
(43) Veröffentlichungstag der Anmeldung: 06.05.2015
(73) Patentinhaber: Audi AG, 85045 Ingolstadt (DE)
(72) Erfinder: DIEDERICHS, Lutz, 85092 Kösching (DE); WUNDERLICH, Matthias, 85053 Ingolstadt (DE)
(74) Vertreter: Brandt, Kai
(86) Internationale Anmeldenummer: PCT/EP2013/001837
(87) Internationale Veröffentlichungsnummer: WO 2014/000875

(56) Entgegenhaltungen:
- DE-A1-102005 015 178
- DE-A1-102007 004 586

## Beschreibung

Die Erfindung betrifft ein Anzeigeinstrument für ein Kraftfahrzeug nach dem Oberbegriff des unabhängigen Anspruchs 1.

Bei heutigen Anzeigeinstrumenten mit drehbar gelagerten Zeigern, die auf einer Skale bzw. einem Zifferblatt für einen Fahrer relevante Informationen anzeigen, wird oberhalb des Zeigers bei so genannten Kombiinstrumenten ein Display bzw. eine Anzeigevorrichtung angeordnet zur Anzeige von weiteren Informationen. Die Anzeigevorrichtung ist dabei unabhängig von den Zeigern, die auch als Kombizeiger bezeichnet werden, auf dem Anzeigeinstrument angeordnet.

Die Anzeigevorrichtung ist dadurch unabhängig von Lage und Position des Zeigers auf dem Anzeigeinstrument angeordnet, wobei die Anzeigevorrichtung den Zeiger großzügig überdecken muss, damit die für den Betrieb der Anzeigevorrichtung und den Zeiger vorgesehene Technik abgeschottet wird.

Aus der DE 10 2010 028 919 A1 ist ferner ein Anzeigeinstrument mit einem Kombizeiger bekannt, der zwei übereinander angeordnete Naben mit jeweils einer Zeigerfahne aufweist. Mit der unteren Nabe ist eine Anzeigevorrichtung gekoppelt, die über der oberen Nabe angeordnet ist, so dass die obere Nabe von der Anzeigevorrichtung für einen Betrachter verdeckt ist. Die Anzeigevorrichtung dreht durch die Verbindung mit der unteren Nabe unabhängig von der Zeigerfahne der oberen Nabe.

DE 10 2007 004 586 A1 beschreibt ein Zeigerinstrument mit einer Zeigerkappe, die eine Anzeige aufweist.

DE 10 2005 015 178 A1 beschreibt ein Zeigerinstrument mit einem Zeiger, der um seine Längsachse drehbar gelagert ist und dadurch eine zweite physikalische Größe darstellen kann.

Es ist eine Aufgabe der vorliegenden Erfindung, das Anzeigeinstrument der eingangs genannten Art derart weiterzuentwickeln, dass eine komplexe Darstellung von Informationen möglich ist.

Ein Anzeigeinstrument zur Lösung der erfinderischen Aufgabe weist die Merkmale des unabhängigen Anspruchs 1 auf. Danach wird ein Anzeigeinstrument für ein Kraftfahrzeug mit wenigstens einem Zeiger vorgeschlagen, der eine mittels einer Nabe drehbar gelagerte Zeigerfahne aufweist, wobei wenigstens eine Anzeigevorrichtung mit dem Zeiger drehfest gekoppelt ist, die in einer Draufsicht auf das Anzeigeinstrument oberhalb des Zeigers angeordnet ist, wobei die Anzeigevorrichtung zusätzlich wenigstens zum Teil seitlich auf dem Zeiger angeordnet ist.

Gerade mit der Möglichkeit, Informationen auf dem Zeiger und am seitlichen Rand des Zeigers darstellen zu können, sind Informationen differenziert darstellbar. Dieses dient einerseits einem ästhetischen Eindruck der Informationsdarstellung und kann andererseits auch helfen, eine Sicherheit durch eine zentrale Anzeigevorrichtung im Blickfeld des Fahrers zu erhöhen. Über die beiden Anzeigevorrichtungen können zusammenhängende Informationen quasi geteilt dargestellt werden, indem nämlich teilweise auf der einen und teilweise auf der anderen Anzeigevorrichtung die Informationen dargestellt werden, so dass eine der Anzeigevorrichtungen nicht mit Informationen überfrachtet wird. Ferner kann die zweite Anzeigevorrichtung auch nur als ein Beleuchtungsmittel für das Anzeigeinstrument dienen, wobei ein Ziffernblatt des Anzeigeinstruments durch die zweite Anzeigevorrichtung illuminiert wird.

Nach einer besonders bevorzugten Ausführungsform der Erfindung kann vorgesehen sein, dass die erste und die zweite Anzeigevorrichtung im Bereich der Nabe angeordnet sind und in der Draufsicht auf das Anzeigeinstrument die Nabe verdecken. Durch das Verdecken der Nabe ist sicher gestellt, dass keine für den Betrieb des Zeigers notwendige Technik in Form von Kabeln oder dergleichen für einen Betrachter in Draufsicht sichtbar ist.

Gemäß der Erfindung, sind die erste und zweite Anzeigevorrichtung mittels eines Trägers, insbesondere einer Kappe, auf dem Zeiger angeordnet sein, wobei die erste Anzeigevorrichtung zumindest zum Teil eine Oberseite und die zweite Anzeigevorrichtung zumindest zum Teil eine Mantelseite des Trägers bedeckt, und die zweite Anzeigevorrichtung mehrere, vorzugsweise miteinander verbundene Teil-Anzeigevorrichtungen aufweist. Damit die Anzeigevorrichtungen auf dem Zeiger fest angeordnet sind, ist ein Träger vorgesehen, der in für eine Kappe üblicher Weise mit der Nabe verbunden ist. Der Träger ist dafür ausgelegt, auch mehrere Anzeigevorrichtungen aufzunehmen, die dann als Teil-Anzeigevorrichtungen miteinander verbunden sind und eine große Anzeigevorrichtung in Form eines Anzeigeelements bilden.

Gemäß einer vorteilhaften Ausgestaltung der Erfindung können die Anzeigevorrichtungen in den Träger integriert sein, wobei der Träger vorzugsweise wenigstens eine Ausnehmung aufweist, durch die die Anzeigevorrichtungen sichtbar sind. Der Träger dient dabei nicht nur als Träger für die Anzeigevorrichtungen, sondern auch als Schutz und Sichtschutz für die Nabe des Zeigers. Durch die Integration lässt sich eine gute Ankoppelung der Anzeigevorrichtungen in den Träger erreichen.

Vorteilhaft kann nach einem weiteren Ausführungsbeispiel eine Oberfläche der ersten und zweiten Anzeigevorrichtungen mit einer Oberfläche des Trägers bündig abschließen. Es sind mehrere Möglichkeiten der Anordnung der jeweiligen Anzeigevorrichtung auf oder in dem Träger denkbar, so dass einerseits die Anzeigevorrichtung lediglich auf dem Träger angeordnet werden kann, oder aber der Träger ist derart gestaltet, dass die Anzeigevorrichtung eine gemeinsame Oberfläche mit dem Träger bildet.

Wenn durch die Anzeigevorrichtung dargestellte Informationen bei Verdrehung der Anzeigevorrichtung nicht mitdrehen, können die Informationen immer für einen Betrachter bzw. Fahrer gut ablesbar sein. Deshalb ist es auch vorgesehen, wenn die erste und zweite Anzeigevorrichtung eine gewölbte Oberfläche aufweisen. Dadurch kann eine Ausrichtung der Informationen zu einem Ziffernblatt des Anzeigeinstruments konstant sein. Die Anzeigevorrichtungen können deshalb derart gestaltet sein, dass zwar die Anzeigevorrichtungen mit dem Träger mitdrehen, aber die durch die Anzeigevorrichtungen dargestellten Informationen für den Fahrer einen Lesehorizont beibehalten. Dieses kann in den Anzeigevorrichtungen durch spezielle Darstellungsmöglichkeiten erreicht werden.

Zur besseren Darstellbarkeit der Informationen kann es nach einem weiteren Ausführungsbeispiel ebenso vorgesehen sein, wenn die Anzeigevorrichtungen eine konkave und/oder konvexe Oberfläche aufweisen. Neben der in der Regel mantelförmigen Seitenfläche des Trägers, durch die die Oberfläche der zweiten Anzeigevorrichtung selbst auch eine Wölbung aufweist, kann es vorteilhaft sein, wenn auf der Oberseite des Trägers die erste Anzeigevorrichtung auch eine gewölbte Oberfläche aufweist. Zur besseren Darstellbarkeit, insbesondere auch von einer seitlichen Blickrichtung auf das Anzeigeinstrument, können gewölbte Anzeigeflächen nützlich sein.

Es kann weiterhin vorteilhaft vorgesehen sein, dass die Anzeigevorrichtungen mit dem Träger verbunden sind, insbesondere die Anzeigevorrichtungen mit dem Träger verklebt, verschweißt, gelötet oder dergleichen sind. Durch die Verbindung der Bauteile ist es gewährleistet, dass sich die Anzeigevorrichtungen beim Verdrehen des Trägers auf dem Zeiger ebenfalls mitdrehen.

Gemäß einer anderen Weiterbildung können die Anzeigevorrichtungen OLED-Anzeigevorrichtungen sein, wobei mit den Anzeigevorrichtungen insbesondere unterschiedliche Farben darstellbar sind. OLED haben den Vorteil, dass sie im Wesentlichen an jede Form angepasst werden können, so dass mit einer OLED eine durchgängige Oberfläche geschaffen werden kann. Mit der Möglichkeit, unterschiedliche Farben darzustellen, kann das Anzeigeinstrument mit unterschiedlichen Farben illuminiert werden.

Wenn die Anzeigevorrichtungen zumindest teilweise undurchsichtig sind, kann auf einen Träger bzw. eine Kappe verzichtet werden, die dann zur Abschirmung des Bereichs der Nabe notwendig wäre.

Weiterhin kann der Träger nach einem anderen bevorzugten Ausführungsbeispiel durchsichtig sein, damit die Darstellbarkeit der Anzeigevorrichtung gewährleistet bleibt. Wenn nämlich die Anzeigevorrichtung in dem Träger integriert ist, können störende Trägerbereiche durch ein durchsichtiges Material begrenzt werden.

Nachfolgend wird anhand der Zeichnung ein bevorzugtes Ausführungsbeispiel der Erfindung näher erläutert. Darin zeigen:
- Fig. 1: eine Draufsicht auf einen Zeiger mit einem Träger,
- Fig. 2: eine Seitenansicht nach Fig. 1, und
- Fig. 3: eine perspektivische Seitenansicht eines Zeigers.

Bei dem Anzeigeinstrument handelt es sich um ein sogenanntes Kombiinstrument für ein Kraftfahrzeug, mit einem Zeiger 10 und einer ersten Anzeigevorrichtung 11 auf einem Ziffernblatt bzw. einer Skale. Dabei ist der Zeiger 10 in an sich bekannter Weise zentral auf der Skale bzw. dem Ziffernblatt gelagert. Der Zeiger 10 ist dabei um einen Lagerpunkt drehbar gelagert zur Anzeige eines Wertes auf dem Ziffernblatt. Das Anzeigeinstrument wird nachfolgend anhand nur eines Zeigers 10 dargestellt werden. Es sind aber auch Ausführungsformen mit eingeschlossen, die mehr als nur einen Zeiger 10 aufweisen, beispielsweise zwei, drei, vier oder mehr Zeiger 10, die die nachstehend beschriebene Ausbildung aufweisen können.

Der Zeiger 10 ist im Allgemeinen mehrteilig ausgebildet und weist in einer einfachen Ausführungsform wenigstens eine Zeigerfahne 12, eine Nabe 13 und einen Träger 14 auf. Mittels der Nabe 13 ist die Zeigerfahne 12 drehbar auf dem Anzeigeinstrument angeordnet, wobei der Träger 14 im Bereich der Nabe 13 angeordnet ist. Der Träger 14 weist im Wesentlichen eine an sich bekannte Form einer Abdeckung bzw. Kappe auf. Der Träger 14 bedeckt die Nabe 13 und einen Anfangsbereich der Zeigerfahne 12, wodurch dieser Bereich von einem Betrachter des Anzeigeinstruments in einer Draufsicht nicht sichtbar ist. Ein Zeiger 10 mit diesen Merkmalen wird auch als ein Kombizeiger bezeichnet, da er aus mehreren Bauteilen gebildet ist.

Zusätzlich zu den wenigstens drei Bestandteilen des Zeigers 10 können noch weitere Bauteile vorgesehen sein. So sind regelmäßig Mittel zur Beleuchtung der Zeigerfahne 12 vorgesehen. Die Anordnung dieser Mittel ist derart gewählt, dass sie von dem Träger 14 oder der Zeigerfahne 12 selbst bedeckt sind, damit der Betrachter sie in Draufsicht auf das Anzeigeinstrument nicht sehen kann.

Neben der reinen Beleuchtung des Zeigers 10 weist der Träger 14 nach einem ersten Ausführungsbeispiel der Erfindung die erste Anzeigevorrichtung 11 zur Darstellung von Informationen auf. Die erste Anzeigevorrichtung 11 beschränkt sich demnach nicht auf die reine Beleuchtung des Trägers 14 bzw. des Zeigers 10. Mit der ersten Anzeigevorrichtung 11 können für den Betrachter bzw. einen Fahrer oder Beifahrer eines Wagens Informationen dargestellt werden. Diese können einerseits fahrzeugrelevante Daten sein, wie beispielsweise Informationen über eine Kraftstoffreserve, eine Öltemperatur oder dergleichen, oder es können sicherheitsrelevante Daten dargestellt werden, wie die Darstellung einer Warnung, wenn das Fahrzeug beispielsweise schleudert, die Reifen durchdrehen, ein Abstand zu einem vorausfahrenden Fahrzeug zu klein ist oder dergleichen. Darüber hinaus können diese Daten allgemeine Informationen sein, die aus fahrsicherheitsrelevanten Aspekten in einer zentralen Position in dem Anzeigeinstrument darzustellen sind. Auch ist es mit der auf dem Träger 14 angeordneten ersten Anzeigevorrichtung 11 bzw. Display möglich, unterschiedliche Informationen darzustellen, die beispielsweise abwechselnd auf der ersten Anzeigevorrichtung 11 erscheinen. Diese Informationen können einerseits von einer Fahrzeugelektrik automatisch in der ersten Anzeigevorrichtung 11 dargestellt werden. Andererseits kann der Fahrer auch von ihm gewünschte Informationen auf der ersten Anzeigevorrichtung 11 aktiv darstellen lassen, indem er nämlich über eine Bedieneinheit (Interface) die gewünschten Informationen abruft oder einen Anzeigenmodus einstellt.

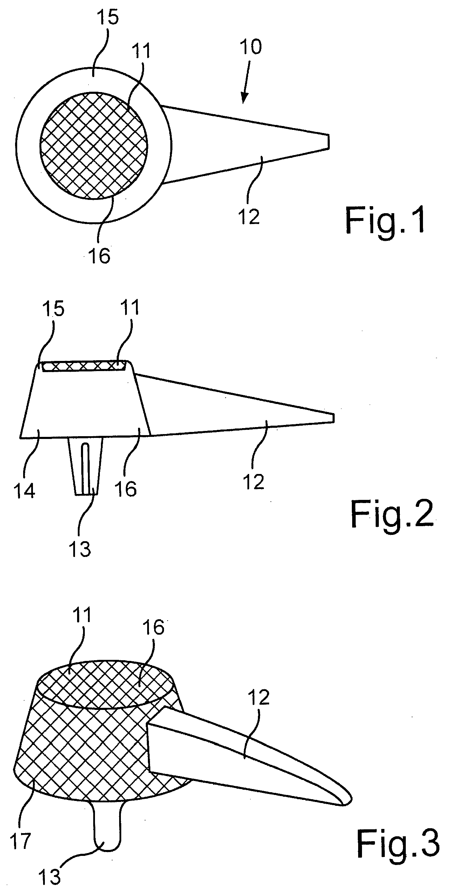

Die erste Anzeigevorrichtung 11 ist nach einem in den Fig. 1 und 2 dargestellten Ausführungsbeispiel zentral auf einer Oberseite 15 des Trägers 14 angeordnet. Von dort sind die darzustellenden Informationen leicht ablesbar. Die erste Anzeigevorrichtung 11 ist dabei derart in die Oberseite 15 integriert, dass eine Oberseite 16 der Anzeigevorrichtung und die Oberseite 15 des Trägers 14 eine, zumindest für den Betrachter, gemeinsame Oberfläche bilden. Dafür weist der Träger 14 auf seiner Oberseite 15 eine Ausnehmung auf. In dieser Ausnehmung ist die erste Anzeigevorrichtung 11 angeordnet, wie beispielsweise in Fig. 2 erkennbar ist.

Die erste Anzeigevorrichtung 11 ist nach dem Ausführungsbeispiel mit dem Träger 14 verklebt, wobei die erste Anzeigevorrichtung 11 in einem nicht dargestellten Aufnahmebereich angeordnet und dort verklebt ist. Die Anzeigevorrichtung 11 kann auch zur Befestigung auf dem Träger 14 mit diesem verschweißt, verlötet, verklipt oder dergleichen sein.

Nach einer anderen Ausführungsform ist die erste Anzeigevorrichtung 11 unterhalb des Trägers 14 angeordnet, wobei der Betrachter die erste Anzeigevorrichtung 11 weiterhin durch die Ausnehmung auf der Oberseite 15 sehen kann. Dabei schließen die beiden Oberseiten von erster Anzeigevorrichtung 11 und Träger 14 nicht bündig ab. In diesem Fall ist es vorgesehen, dass in einem Bereich der Ausnehmung eine durchsichtige Abdeckung angeordnet ist, wodurch sich für den Betrachter ein besseres Gesamtbild des Zeigers 10 ergibt. Außerdem kann die Abdeckung die erste Anzeigevorrichtung 11 schützen.

Gemäß einem weiteren Ausführungsbeispiel ist die erste Anzeigevorrichtung 11 über der Oberseite 15 des Trägers 14 angeordnet, wodurch sich für den Betrachter ein Bild ergibt, dass sich die erste Anzeigevorrichtung 11 von dem Träger 14 absetzt. Damit die erste Anzeigevorrichtung 11 mit Daten und Strom versorgt wird, ist in dem Träger 11 dennoch eine Ausnehmung vorgesehen, durch die die Daten- und Stromkabel gelegt sind. Die Ausnehmung ist unterhalb der ersten Anzeigevorrichtung 11 in dem Träger 14 vorgesehen, damit die Kabel für den Betrachter nicht sichtbar sind.

In den Fig. 1 und 2 ist die erste Anzeigevorrichtung 11 mit einer runden Form dargestellt. Alternativ kann die Form im Allgemeinen beliebig gehalten sein, wobei eckige, ovale oder geschwungene Formen bevorzugt sind. Die erste Anzeigevorrichtung 11 kann auch die gesamte Oberseite 15 des Trägers 14 bedecken, so dass kein in den Fig. 1 und 2 dargestellter Rand für den Betrachter sichtbar ist. Dadurch kann ein größerer Bereich zur Darstellung von Informationen genutzt werden. In diesem Zusammenhang ist es auch möglich, eine erste Anzeigevorrichtung 11 auf dem Träger 14 anzuordnen, die größer, vorzugsweise wesentlich größer als der Träger 14 ist. Die Größe der ersten Anzeigevorrichtung 11 kann derart gewählt werden, dass gerade noch eine Spitze der Zeigerfahne 12 sichtbar ist.

Neben der Anordnung der ersten Anzeigevorrichtung 11 im Bereich der O-berseite 15 des Trägers 14 ist weiterhin vorgesehen, dass eine Mantelseite 17 des Trägers 14 mit einer zweiten Anzeigevorrichtung 21 versehen ist. Die zweite Anzeigevorrichtung 21 ist vorzugsweise eine separate Anzeigevorrichtung, die in den Figuren nicht dargestellt ist. Dabei bedeckt die zweite Anzeigevorrichtung 21 zumindest zum Teil die gesamte Mantelseite 17. Lediglich ein Bereich, von dem aus sich die Zeigerfahne 12 erstreckt, weist keine Anzeigevorrichtung auf, wobei die zweite Anzeigevorrichtung 21 derart gestaltet ist, dass sie an der Zeigerfahne 12 seitlich anliegt.

Die Größe der zweiten Anzeigevorrichtung 21 kann variieren, so dass die zweite Anzeigevorrichtung 21 sich nicht über eine gesamte Höhe der Mantelseite erstrecken muss, wodurch ein kleiner Streifen an einer unteren Kante des Trägers 14 übrig bleibt. Nach einer anderen Ausführungsform ist es vorgesehen, dass auch ein Streifen zwischen der Oberseite 15 und der Mantelseite 17 zu sehen ist, so dass die zweite Anzeigevorrichtung 21 auf der Mantelseite 17 auch als eine Art Streifen ausgebildet ist. Gemäß einer Ausführungsform erstreckt sich die zweite Anzeigevorrichtung 21 über die gesamte Höhe der Mantelseite 17.

Die zweite Anzeigevorrichtung 21 auf der Mantelseite 17 ist entweder auf dem Träger 14 angeordnet, wodurch sie von dem Träger 14 abgesetzt ist, oder in einer Ausnehmung, was auch die bevorzugte Ausführungsform ist, in der Mantelseite 17. Die Mantelseite 17 weist wie die Oberseite 15 eine nicht dargestellte Ausnehmung auf, in der die zweite Anzeigevorrichtung 21 angeordnet ist. Dabei schließt die zweite Anzeigevorrichtung 21, wie die erste Anzeigevorrichtung 11, bündig mit der umliegenden Mantelseite 17 ab. Zusätzlich kann noch ein Abdeckung vorgesehen sein, die die zweite Anzeigevorrichtung 21 schützt.

Die Anordnung der zweiten Anzeigevorrichtung 21 in einer Ausnehmung ist bevorzugt, da ansonsten der Betrachter auf eine Kante der zweiten Anzeigevorrichtung 21 blicken würde, was unter einem gestalterischen Aspekt unerwünscht ist. Die zweite Anzeigevorrichtung 21 ist gemäß einem weiteren Aspekt der Erfindung mehrteilig ausgebildet, so dass mehrere Teil-Anzeigevorrichtungen die zweite Anzeigevorrichtung 21 bilden. Die Teil-Anzeigevorrichtungen sind auf der Mantelseite 17 nebeneinander angeordnet, wobei die Teil-Anzeigevorrichtungen miteinander verbunden sind. Durch die Verbindung der Teil-Anzeigevorrichtungen ist eine möglichst einheitliche Darstellung der Information möglich.

Es ist darüber hinaus auch möglich, dass sich die erste Anzeigevorrichtung 11 über die Oberseite 15 hinaus bis in einen Bereich der Mantelseite 17 erstreckt, weshalb die erste Anzeigevorrichtung 11 eine Kante an einem Übergang von Oberseite 15 und Mantelseite 17 bildet.

Dadurch ergibt sich ein fließender Übergang in dem Kantenbereich zwischen Oberseite 15 und Mantelseite 17, wodurch gerade die Darstellung der Informationen verbessert werden kann. Die zweite Anzeigevorrichtung 21 schließt sich an die erste Anzeigevorrichtung nahezu nahtlos an, so dass für den Betrachter keine störende Fuge sichtbar ist. Dies betrifft auch den Fall, dass die zweite Anzeigevorrichtung 21 aus mehreren Teil-Anzeigevorrichtungen gebildet ist. Das bedeutet, dass die erste und zweite Anzeigevorrichtung 11, 21 auch derart miteinander verbunden sein können, dass sie als eine einzige Anzeigevorrichtung wahrgenommen werden.

Die erste Anzeigevorrichtung 11 umfasst in einem weiteren Ausführungsbeispiel den gesamten Träger 14. Kabelgänge für die erste Anzeigevorrichtung 11 sind dann unterhalb der Anzeigevorrichtung in der Kappe 14 angeordnet, so dass sie für den Betrachter nicht sichtbar sind.

Die Anzeigevorrichtungen 11, 21 sind OLED-Anzeigevorrichtungen. Die Anzeigevorrichtungen 11, 21 sind also leuchtende Dünnfilmbauelemente mit organischen halbleitenden Materialen. Solche OLED-Anzeigevorrichtungen in Form von Bildschirmen oder Displays sind in ihren geometrischen Ausformungen vielfältig. Das bedeutet, dass die Anzeigevorrichtungen 11, 21 jegliche gewünschte Form aufweisen können, insbesondere sich leicht an die von dem Träger 14 vorgegebene Form anpassen lassen. Deshalb ist es möglich, die Anzeigevorrichtungen 11, 21 mit einer gekrümmten Oberseite 16 auszuführen, so dass vorzugsweise auch auf der Oberseite 15 des Trägers 14 die Anzeigevorrichtung 11 konkav bzw. konvex gestaltet ist. Auf der Mantelseite 17 weist die Anzeigevorrichtung 21, auch in Gestalt mehrerer Teil-Anzeigevorrichtungen, eine runde, scheibenartige oder ringartige Form auf. Ferner kann die Anzeigevorrichtung 21 leicht konusförmig verlaufen.

Da mit einer OLED-Anzeigevorrichtung unterschiedliche Informationen gleichzeitig darstellbar sind, können beispielsweise auf der Oberseite 15 für den Fahrer relevante Informationen dargestellt werden, während der Bereich der Anzeigevorrichtung 11 auf der Mantelseite 17 zur Darstellung anderer Informationen genutzt werden kann. Bei zwei separaten Anzeigevorrichtungen 11, 21 ist dieses natürlich ebenfalls möglich. Mit unterschiedlichen Farben, die von der OLED-Anzeigevorrichtung darstellbar sind, kann das Anzeigeinstrument 11, 21 auch in unterschiedlichen Farben illuminiert werden, durch die eine Farbinszenierung auf dem Ziffernblatt möglich ist.

In der Fig. 3 ist ein Zeiger 10 dargestellt, der ein durchgehendes Anzeigeelement auf Oberseite 15 und Mantelseite 17 aufweist, wobei das Anzeigeelement nur von der Zeigerfahne 12 durchbrochen wird. Das Anzeigeelement ist dabei aus den beiden Anzeigevorrichtungen 11, 21 gebildet. Eine Beleuchtung der Zeigerfahne 12 erfolgt unabhängig von der Darstellung von Informationen oder Farbspektren des Anzeigeelements. Die Darstellbarkeit von Informationen ist zweiteilig möglich, weshalb auf der Mantelseite 17 unabhängig von der Oberseite 15 Informationen darstellbar sind. Während beispielsweise auf der Mantelseite 17 ein Kompass dargestellt wird, kann auf der Oberseite 15 ein Text dargestellt werden, der in Verbindung mit dem Kompass steht oder unabhängige Informationen darbietet. Auch kann das Anzeigeelement auf der Mantelseite 17 ein Skalierung aufweisen, die mit einer Zeigerinformation auf der Oberseite 15 korrespondiert. Hierzu ist die Mantelseite 17 des Anzeigeelements zumindest teilweise schräg zu dem Ziffernblatt ausgerichtet, so dass der Betrachter in einer Draufsicht gut die Informationen auf dem seitlichen Bereich des Anzeigeelements erkennen kann.

Es ist in den vorgenannten Ausführungsbeispielen vorgesehen, dass die Anzeigevorrichtungen 11, 21 fest mit dem Träger 14 bzw. dem Zeiger 10 verbunden sind. Damit die Informationen für den Betrachter bei Verdrehen des Kombizeigers 10 nicht mitdrehen und die Informationen nur noch unzureichend erkannt werden, ist es vorgesehen, dass in Abhängigkeit eines Drehwinkels der Zeigerfahne 12 die Informationen in Hinblick auf einen Betrachtungshorizont konstant bleiben. Die Anzeigevorrichtung 11 wird demnach derart angesteuert, dass beim Verdrehen der Anzeigevorrichtungen 11, 21 die Informationen sich für den Betrachter nicht mitdrehen. Gleichwohl drehen sich die Informationen bezüglich der Anzeigevorrichtungen 11, 21.

## Patentansprüche

1. Anzeigeinstrument für ein Kraftfahrzeug mit wenigstens einem Zeiger (10), der eine mittels einer Nabe (13) drehbar gelagerte Zeigerfahne (12) aufweist, wobei wenigstens eine erste Anzeigevorrichtung (11) mit dem Zeiger (10) drehfest gekoppelt ist, die in einer Draufsicht auf das Anzeigeinstrument oberhalb des Zeigers (10) angeordnet ist, mit mindestens einer zweiten Anzeigevorrichtung (21), die seitlich auf dem Zeiger (10) angeordnet ist, **dadurch gekennzeichnet, dass**
die erste und zweite Anzeigevorrichtung (11, 21) mittels eines Trägers (14) auf dem Zeiger (10) angeordnet sind, wobei die erste Anzeigevorrichtung (11) zumindest zum Teil eine Oberseite (15) und die zweite Anzeigevorrichtung (21) zumindest zum Teil eine Mantelseite (17) des Trägers (14) bedeckt, und die zweite Anzeigevorrichtung (21) mehrere, vorzugsweise miteinander verbundene Teil-Anzeigevorrichtungen aufweiset.

2. Anzeigeinstrument nach Anspruch 1,
**dadurch gekennzeichnet, dass**
die erste und zweite Anzeigevorrichtung (11, 21) im Bereich der Nabe (13) angeordnet sind und in der Draufsicht auf das Anzeigeinstrument die Nabe (13) verdecken.

3. Anzeigeinstrument nach Anspruch 1 oder 2,
**dadurch gekennzeichnet, dass**
der Träger (14) eine Kappe ist.

4. Anzeigeinstrument nach einem der vorhergehenden Ansprüche,
**dadurch gekennzeichnet, dass**
die erste und zweite Anzeigevorrichtung (11) in den Träger (14) integriert sind, wobei der Träger (14) vorzugsweise wenigstens eine Ausnehmung aufweist, durch die die Anzeigevorrichtungen (11, 21) sichtbar sind.

5. Anzeigeinstrument nach einem der vorhergehenden Ansprüche,
**dadurch gekennzeichnet, dass**
eine Oberfläche der ersten und zweiten Anzeigevorrichtung (11,21) mit einer Oberfläche des Trägers (14) bündig abschließt.

6. Anzeigeinstrument nach wenigstens einem der vorhergehenden Ansprüche,
**dadurch gekennzeichnet, dass**
die Anzeigevorrichtungen (11, 21) derart ausgebildet sind, dass durch die Anzeigevorrichtungen (11, 21) dargestellte Informationen bei Verdrehung der Anzeigevorrichtungen (11, 21) für einen Betrachter lagestabil anzeigbar sind.

7. Anzeigeinstrument nach wenigstens einem der vorhergehenden Ansprüche 1 oder 3 bis 6,
**dadurch gekennzeichnet, dass**
die erste und zweite Anzeigevorrichtung (11, 21) eine konkave und/oder konvexe Oberfläche aufweisen.

8. Anzeigeinstrument nach wenigstens einem der vorhergehenden Ansprüche 1 oder 3 bis 7,
**dadurch gekennzeichnet, dass**
die Anzeigevorrichtungen (11, 21) mit dem Träger (14) verbunden sind, insbesondere die Anzeigevorrichtungen (11, 21) mit dem Träger (14) verklebt, verschweißt, gelötet oder dergleichen sind.

9. Anzeigeinstrument nach wenigstens einem der vorhergehenden Ansprüche,
**dadurch gekennzeichnet, dass**
die Anzeigevorrichtungen (11) OLED-Anzeigevorrichtungen sind.

10. Anzeigeinstrument nach wenigstens einem der vorhergehenden Ansprüche,
**dadurch gekennzeichnet, dass**
die Anzeigevorrichtungen (11) zumindest teilweise undurchsichtig sind.

11. Anzeigeinstrument nach wenigstens einem der vorhergehenden Ansprüche 1
oder 3 bis 10,
**dadurch gekennzeichnet, dass**
der Träger (14) durchsichtig ist, wobei insbesondere der Träger (14) eine Abdeckung aufweist, die durchsichtig ist.

## Claims

1. Display instrument for a motor vehicle comprising at least one pointer (10) having a pointer vane (12) rotatably mounted by means of a hub (13), wherein at least a first display device (11), which, in plan view of the display instrument, is arranged above the pointer (10), is coupled non-rotatably to the pointer (10), at least a second display device (21) being arranged laterally on the pointer (10),
**characterized in that**
the first and second display devices (11, 21) are disposed on the pointer (10) by means of a carrier (14), wherein the first display device (11) at least partially covers an upper side (15) and the second display device (21) at least partially covers an outer side (17) of the carrier (14), and the second display device (21) comprises several, preferably connected, partial display devices.

2. Display instrument according to claim 1,
**characterized in that**
the first and second display devices (11, 21) are arranged in the area of the hub (13) and, in plan view of the display instrument, conceal the hub (13).

3. Display instrument according to claim 1 or 2,
**characterized in that**
the carrier (14) is a cap.

4. Display instrument according to any of the preceding claims,
**characterized in that**
the first and second display devices (11) are integrated in the carrier (14), wherein the carrier (14) preferably comprises at least one recess through which the display devices (11, 21) are visible.

5. Display instrument according to any of the preceding claims,
**characterized in that**
a surface of the first and second display devices (11, 21) is flush with a surface of the carrier (14).

6. Display instrument according to at least one of the preceding claims,
**characterized in that**
the display devices (11, 21) are configured such that information displayed by the display devices (11, 21) are displayed to the viewer in a positionally stable manner when the display devices (11, 21) are rotated.

7. Display instrument according to at least one of the preceding claims 1 or 3 to 6,
**characterized in that**
the first and second display devices (11, 21) comprise a concave and/or convex surface.

8. Display instrument according to at least one of the preceding claims 1 or 3 to 7,
**characterized in that**
the display devices (11, 21) are fixed to the carrier (14), in particular the display devices (11, 21) are glued, welded, soldered or the like to the carrier (14).

9. Display instrument according to at least one of the preceding claims,
**characterized in that**
the display devices (11) are OLED display devices.

10. Display instrument according to at least one of the preceding claims,
**characterized in that**
the display devices (11) are at least partially opaque.

11. Display instrument according to at least one of the preceding claims 1 or 3 to 10,
**characterized in that**
the carrier (14) is transparent, wherein in particular the carrier (14) comprises a transparent cover.

## Revendications

1. Instrument indicateur pour véhicule à moteur avec au moins un indicateur (10) qui comporte une aiguille indicatrice (12) montée pivotante par l'intermédiaire d'un moyeu (13), dans lequel au moins un premier dispositif indicateur (11) est couplé rigide en pivotement avec l'indicateur (10) etse trouve placé,en vue de dessusdel'instrument indicateur au-dessus de l'indicateur (10), avec au moins un deuxième dispositif indicateur (21) qui est disposé latéralement par rapport à l'indicateur (10) **caractérisé en ce que** :
le premier et le deuxième dispositif indicateur (11, 21) sont placés au-dessus de l'indicateur (10) au moyen d'un support (14), dans lequel pour le premier dispositif indicateur (11) au moins pour une partie de sa face supérieure (15) et
pour le deuxième dispositif indicateur (21), au moins pour une partie de sa surface latérale (17) recouvrent le support (14) et **en ce que** le deuxième dispositif indicateur (21) présente plusieurs dispositifs indicateurs partiels, de préférence reliés entre eux.

2. Instrument indicateur selon la revendication 1 **caractérisé en ce que** le premier et le deuxième dispositif indicateur (11,21) sont placés dans la région du moyeu (13) et en vue de dessus de l'instrument indicateur, recouvrent le moyeu (13).

3. Instrument indicateur selon la revendication 1 ou 2 **caractérisé en ce que** le support (14) est une coiffe.

4. Instrument indicateur selon l'une des revendications précédentes **caractérisé en ce que** le premier et le deuxième dispositif indicateur (11) sont intégrés dans le support (14), dans lequel le support (14) présente, de préférence, au moins un évidement à travers lequel les dispositifs indicateurs (11, 21) sont visibles.

5. Instrument indicateur selon au moins l'une des revendications précédentes **caractérisé en ce qu'**une surface du premier et du deuxième dispositif indicateur (11,21) est encastrée dans une surface du support (14).

6. Instrument indicateur selon au moins l'une des revendications précédentes **caractérisé en ce que** les dispositifs indicateurs (11,21) sont réalisés de façon que lorsqu'une déformation des dispositifs indicateurs (11, 21) se produit, les informationsaffichées par lesdispositifs indicateurs (11, 21)restent stables pour un observateur.

7. Instrument indicateur selon au moins l'une des revendications précédentes 1 ou de 3 à 6 **caractérisé en ce que** le premier et le deuxième dispositif indicateur (11,21) présentent une surface concave et/ou convexe.

8. Instrument indicateur selon au moins l'une des revendications précédentes 1 ou de 3 à 7 **caractérisé en ce que** les dispositifs indicateurs (11, 21) sont liés au support (14), en particulier les dispositifs indicateurs (11,21) sont collés, soudés, brasés ou analogue au support (14).

9. Instrument indicateur selon au moins l'une des revendications précédentes **caractérisé en ce que** les dispositifs indicateurs (11) sont des dispositifs indicateurs à OLED (diodes électroluminescentes organiques).

10. Instrument indicateur selon au moins l'une des revendications précédentes **caractérisé en ce que** les dispositifs indicateurs (11) sont au moins partiellement opaques.

11. Instrument indicateur selon au moins l'une des revendications précédentes 1 ou de 3 à 10 **caractérisé en ce que** le support (14) est transparent, dans lequel en particulier le support (14) présente unrecouvrement transparent.
